# EUROPEAN PATENT APPLICATION

(11) **EP 3 557 574 A1**
(43) Date of publication of application: **23.10.2019**
(21) Application number: 19169162.5
(22) Date of filing: 15.04.2019
(51) Int. Cl.: G10L 15/22, G10L 15/30

(54) **VOICE CONTROL METHOD, SERVER, AND VOICE EXCHANGE SYSTEM**

(30) Priority: 19.04.2018 CN 201810352997
(71) Applicant: BSH Hausgeräte GmbH, 81739 München (DE)
(72) Inventor: Ju, Wangkou, Nanjing 210046 (CN); Li, Chao, Nanjing City 210014 (CN); Mu, Jinhong, Nanjing 210096 (CN); Yang, Hui(TEI), Nanjing 210046 (CN)

(57) **Abstract**

A voice control method, a server, and a voice exchange system are provided. The method includes: receiving, by the first server, a voice recognition request from a first household appliance, and sending the voice recognition request to a second server to perform voice recognition, the voice recognition request including a voice collected by the first household appliance; receiving, by the first server, a voice recognition result fed back by the second server; and sending, by the first server, a control command according to the voice recognition result, the voice recognition result including at least one of first household appliance control information, multimedia request information, and second household appliance control information. The second server is invoked through the first server to realize voice analysis and voice control, so that the first server can obtain user data and a control instruction in time, to enhance data security.

## Description

### BACKGROUND

### Technical Field

The present invention relates to a technical field of household appliances, and in particular, to a voice control method, a server, and a voice exchange system.

### Related Art

With development of machine learning and artificial intelligence, voice technology is getting mature. In recent years, many manufacturers begin to develop products with voice functions at a higher speed, including refrigerators, air-conditioners, and televisions that can be controlled through voices.

However, existing technologies such as voice control and voice recognition applied in a field of household appliances are still in an early application phase, and cannot realize precise control on household appliances. Furthermore, different types of voice control performed by servers are not realized yet. Furthermore, voice control applied in the field of household appliances puts forward a new challenge for data security.

### SUMMARY

One objective of embodiments of the present invention is to provide an improved voice control method, server, and voice control system.

A further objective of the embodiments of the present invention is to provide a voice control solution that ensures user data security.

Yet another objective of the embodiments of the present invention is to provide an improved coffee maker that can realize voice exchange.

These objects may be accomplished by the subject-matter of the independent claims. The dependent claims specify embodiments.

To solve the foregoing problems, the present invention provides a voice control method, applied in a first server. The method includes: receiving, by the first server, a voice recognition request from a first household appliance, and sending the voice recognition request to a second server to perform voice recognition, the voice recognition request including a voice collected by the first household appliance; receiving, by the first server, a voice recognition result fed back by the second server; and sending, by the first server, a control command according to the voice recognition result, the voice recognition result including at least one of first household appliance control information, multimedia request information, and second household appliance control information. The second server is invoked through the first server to realize voice analysis and voice control, so that the first server can obtain user data and a control instruction in time, to enhance data security.

The control command may be sent to the first household appliance if the voice recognition result is the first household appliance control information. A voice control instruction is analyzed through the first server and the second server, to realize voice control on the first household appliance.

Multimedia information may be requested from a third server according to the voice recognition result if the voice recognition result is the multimedia request information, and the multimedia information may be received and sent to the first household appliance. The multimedia functions of the first household appliance may be expanded and man-machine interaction of a household appliance is enhanced through analyzing voice information by the second server and invoking the third server from which multimedia information is requested.

The multimedia information can be converted into a voice format, and the control command in the voice format may be sent to the first household appliance.

The multimedia information may include at least one of weather information, time information, music, encyclopedia question answering, and dialogue information.

The voice recognition result may be sent to a fourth server if the voice recognition result is the second household appliance control information, so that the fourth server may control a second household appliance through wireless communication. Controlling other household appliances through voices can be realized.

The control command may include the voice format or a text format.

The embodiments of the present invention further provide a server, including: a request module, configured to receive a voice recognition request from a first household appliance, and send the voice recognition request to a second server to perform voice recognition, the voice recognition request including a voice collected by the first household appliance; a receiving module, configured to receive a voice recognition result fed back by the second server; and a sending module, configured to send a control command according to the voice recognition result, the voice recognition result including at least one of first household appliance control information, multimedia request information, and second household appliance control information.

The sending module may be further configured to send the control command to the first household appliance according to the first household appliance control information.

The sending module may be further configured to request multimedia information from a third server according to the voice recognition result; and receive the multimedia information, and send the multimedia information to the first household appliance.

The sending module may be further configured to convert the multimedia information into a voice format and send the control command in the voice format to the first household appliance.

The multimedia information may include at least one of weather information, time information, music, encyclopedia question answering, and dialogue information.

The sending module may be further configured to send the voice recognition result to a fourth server according to the second household appliance control information, so that the fourth server controls a second household appliance through wireless communication.

The first household appliance may be a coffee maker having a voice control function.

The embodiments of the present invention further include a voice exchange system, including a first household appliance, a first server, and a second server. The first household appliance is configured to collect and send a voice recognition request, and the voice recognition request includes a voice collected by the first household appliance; the first server may include any server described above; and the second server may recognize the voice and feeds back a voice recognition result to the first server.

The first household appliance may be a coffee maker having a voice control function. The coffee marker can realize voice control, realize voice exchange by accessing different types of servers, and become a family control center.

Compared with the existing technology, the technical solution of the present invention may have the following advantages: By using the foregoing solution, the second server may be invoked through the first server to realize voice analysis and voice control, so that the first server can obtain user data and a control instruction in time, to enhance data security. A voice control instruction may be analyzed through the first server and the second server, to realize voice control on the first household appliance. The multimedia functions of the first household appliance may be expanded and man-machine interaction of a household appliance may be enhanced through analyzing voice information by the second server and invoking the third server from which multimedia information is requested.

Furthermore, the coffee marker of the present invention can realize voice control, realize voice exchange by accessing different types of servers, and become a family control center.

### BRIEF DESCRIPTION OF THE DRAWINGS

FIG. 1 is a schematic diagram of a network structure of a voice exchange system according to an embodiment of the present invention;
FIG. 2 is a structural block diagram of a household appliance according to an embodiment of the present invention;
FIG. 3 is a structural block diagram of a server according to an embodiment of the present invention;
FIG. 4 is a flowchart of a voice control method according to an embodiment of the present invention;
FIG. 5 is a signaling interaction diagram of a voice control method according to an embodiment of the present invention;
FIG. 6 is a signaling interaction diagram of another voice control method according to an embodiment of the present invention; and
FIG. 7 is a signaling interaction diagram of yet another voice control method according to an embodiment of the present invention.

### DETAILED DESCRIPTION

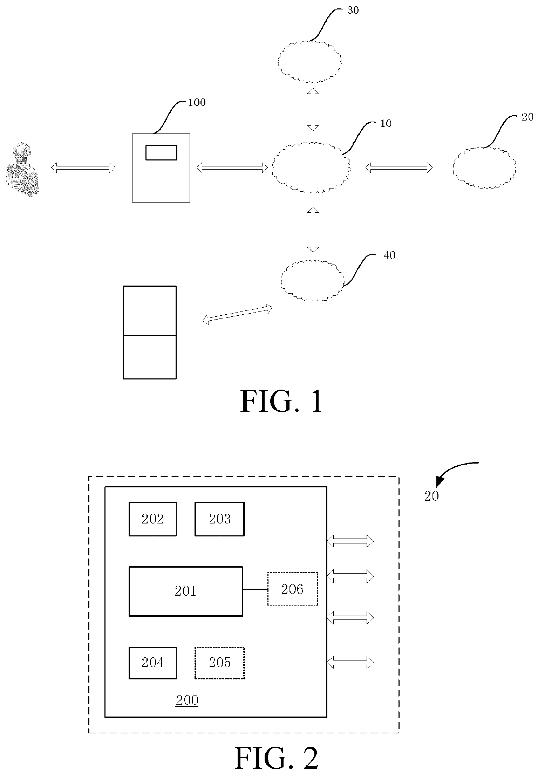

As shown in FIG. 1, an embodiment of the present invention provides a voice exchange system 10, including a first household appliance 20 (for example, a coffee maker), a first server 30, and a second server 40. The first household appliance 20 is configured to collect and send a voice recognition request and the voice recognition request includes a voice collected by the first household appliance 20. The first server 30 is configured to receive and forward the voice recognition request and send a control command according to a received voice recognition result. The second server 40 performs recognition on the voice and feeds back the voice recognition result to the first server 30.

In an embodiment, referring to FIG. 2, besides common members, the first household appliance 20 further includes a voice control module 200. The voice control module includes a processor 201, a voice collection unit 202 (for example, an annular microphone array) and a wireless communications unit 203 connected to the processor 201, and a mode setting unit 204 connected to the processor 201. The mode setting unit 204 is configured to select the second server 40 with a voice analysis function and can be a mechanical button or a knob with a plurality of adjustable positions.

In an embodiment, referring to FIG. 2, the first household appliance 20 further includes a voice output unit 205 (for example, a speaker) connected to the processor 201.

In an embodiment, the mode setting unit 204 is further configured to control a volume of the voice output unit 205 and the adjustable positions of the mode setting unit 204 correspond to different volume levels.

In an embodiment, referring to FIG. 2, the voice output unit 205 includes a broadcasting selection unit 2051 (not shown) and is configured to select a broadcasting mode of a different sound type according to an analyzed voice. For example, the broadcasting selection unit 2051 has three grade places respectively corresponding to an adult male voice, an adult female voice, and a child voice, and a user can set a different grade place through the broadcasting selection unit 2051, so that the speaker outputs a different voice.

In an embodiment, referring to FIG. 2, the first household appliance 20 further includes a touch display module 206 configured to display a working state of the first household appliance 20, set a volume of the speaker, select the second server 40, and so on.

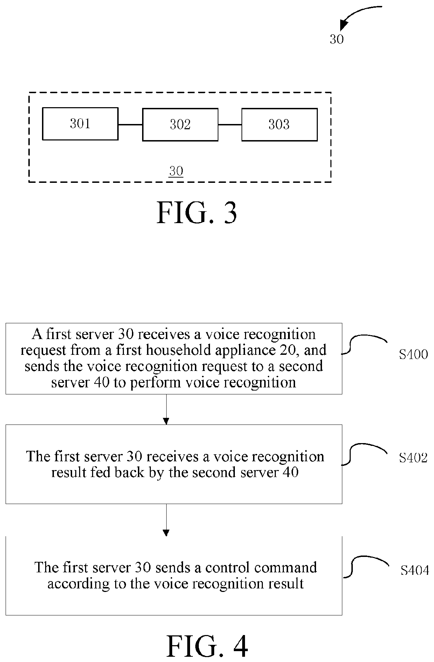

In an embodiment, referring to FIG. 3, the first server 30 includes: a request module 301, configured to receive a voice recognition request from the first household appliance 20 and send the voice recognition request to the second server 40 to perform voice recognition, the voice recognition request including a voice collected by the first household appliance 20; a receiving module 302, configured to receive a voice recognition result fed back by the second server 40; and a sending module 303, configured to send a control command according to the voice recognition result, the voice recognition result including at least one of first household appliance control information, multimedia request information, and second household appliance control information.

In an embodiment, the sending module 303 is further configured to send the control command to the first household appliance 20 according to the first household appliance control information.

In an embodiment, the sending module 303 is further configured to request multimedia information from a third server 50 according to the voice recognition result; and receive the multimedia information, and send the multimedia information to the first household appliance 20. The third server 50 is a content server, such as a search engine and a music platform, that can provide multimedia information.

In an embodiment, the sending module 303 is further configured to convert the multimedia information into a voice format and send the control command in the voice format to the first household appliance 20.

In an embodiment, the multimedia information includes at least one of weather information, time information, music, encyclopedia question answering, and dialogue information.

In an embodiment, the sending module 303 is further configured to send the voice recognition result to a fourth server 60 according to the second household appliance control information, so that the fourth server 60 controls a second household appliance 20' through wireless communication. The fourth server 60 is a household appliance cloud platform connected to Internet household appliances and realizes remote control on a plurality of household appliances through the platform.

The second server 40 is a voice analysis server and can realize voice recognition and voice comprehension.

On the basis of the voice exchange system, an embodiment of the present invention further provides a voice control method, as shown in FIG. 4.

S400: A first server 30 receives a voice recognition request from a first household appliance 20, and sends the voice recognition request to a second server 40 to perform voice recognition, the voice recognition request including a voice collected by the first household appliance 20.

S402: The first server 30 receives a voice recognition result fed back by the second server 40.

S404: The first server 30 sends a control command according to the voice recognition result, the voice recognition result including at least one of first household appliance control information, multimedia request information, and second household appliance control information.

According to the solution, the second server is invoked through the first server to perform analysis of a voice control instruction, to realize a voice control function, and on the basis of this, security of user data and control mode is enhanced.

A working mode of the voice control is described with reference to an application scenario of a coffee maker.

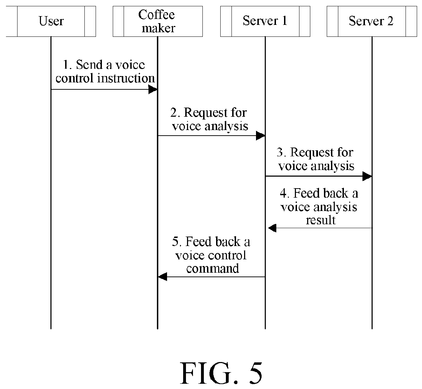

Referring to FIG. 5, in an embodiment, the coffee maker is in a normal working state, and a user sends an instruction for controlling the coffee maker to work to the coffee marker. For example, when the user sends a voice "make a cup of espresso", the voice control module 200 of the coffee maker generates a recording file for the voice and sends the recording file to a server 1 (that is, the first server 30), the server 1 analyzes the recording file through a server 2 (that is, the second server 40), and converts an analysis result into a coffee making instruction and voice and sends the same back to the voice control module 200, the instruction is sent to a main control chip of the coffee maker through a serial port to perform a corresponding operation and broadcast a corresponding voice, for example, "OK, the coffee is being prepared, please wait". Furthermore, in an embodiment, the coffee maker includes a local control instruction. When the coffee maker receives a relevant instruction for controlling the coffee maker to work, the local control instruction can be directly invoked to control the coffee maker to work, and a remote server does not need to be accessed.

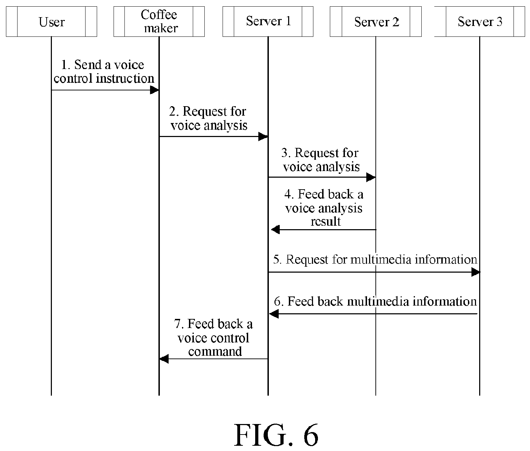

Referring to FIG. 6, in an embodiment, the coffee maker is in a normal working state. When a user sends a voice instruction for requesting multimedia information to the coffee maker, for example, the user sends a voice "please play the song Love Confession of Zhou Jielun" to the coffee maker, the voice control module 200 of the coffee maker sends the voice to the server 1 (that is, the first server 30), the server 1 analyzes the voice file through the server 2 (that is, the second server 40), the server 1, according to an analysis result, requests music information from a docked server 3 (that is, the third server 50, for example, a third party platform providing multimedia content, such as Baidu and NetEase music) and sends back URL of the music after searching it, and the voice control module plays the music by its own player. Requesting for multimedia information includes requesting for results or answers of services such as weather, time, encyclopedia question answering, and man-machine chat.

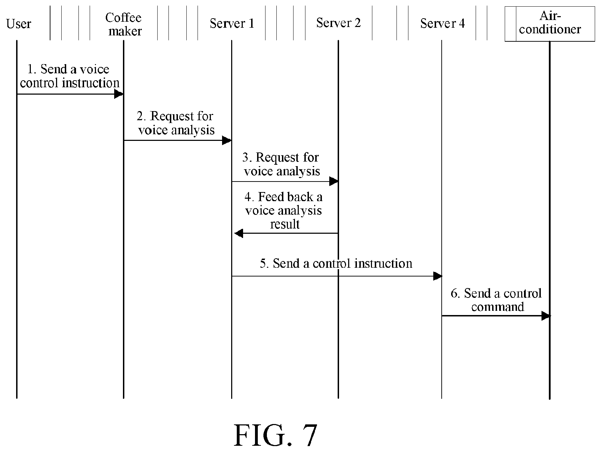

Referring to FIG. 7, in an embodiment, the coffee maker is in a normal working state. When a user sends an instruction for controlling another household appliance to the coffee maker, for example, the user sends a voice "please turn on the air-conditioner for cooling" to the coffee maker, the voice control module 200 of the coffee maker sends the voice to the server 1 (that is, the first server 30), the server 1 analyzes the voice file through the server 2 (that is, the second server 40), and the server 1 sends a control instruction to a docked server 4 (that is, the fourth server 60) according to an analysis result, and sends a control command to the controlled household appliance through the server 4. The server 4 is a household appliance control cloud server, and a controlled household appliance is connected to the server 4 through wireless communication. Furthermore, when the air-conditioner is started, a started state is fed back to the coffee maker. In other embodiments, the controlled household appliance can be an oven, an air cleaner, and so on.

A person skilled in the art understands that all or some of the steps of the methods in the foregoing embodiments can be implemented by instructing related hardware through a program. The program can be stored in a computer readable storage medium, and the storage medium includes ROM, RAM, a magnetic disk, or an optical disk.

Although the present invention is disclosed as above, the present invention is not limited thereto. A person skilled in the art can make various changes and modifications without departing from the scope of the present invention as defined by the appended claims.

## Claims

1. A voice control method, operating on a first server (30), **characterized in that**, the method comprises:
receiving, by the first server, a voice recognition request from a first household appliance (20), and sending the voice recognition request to a second server (40) to perform voice recognition (S400), wherein the voice recognition request comprises a voice collected by the first household appliance;
receiving, by the first server, a voice recognition result fed back by the second server (S402); and
sending, by the first server, a control command according to the voice recognition result (S404), wherein the voice recognition result comprises at least one of a first household appliance control information, a multimedia request information, and a second household appliance control information.

2. The method according to claim 1, **characterized in that**, the sending a control command according to the voice recognition result comprises: sending the control command to the first household appliance if the voice recognition result is the first household appliance control information.

3. The method according to claim 1 or 2, **characterized in that**, the sending a control command according to the voice recognition result comprises: requesting multimedia information from a third server according to the voice recognition result if the voice recognition result is the multimedia request information; and
receiving the multimedia information and sending the multimedia information to the first household appliance (20).

4. The method according to claim 3, **characterized in that**, the receiving the multimedia information and sending the multimedia information to the first household appliance comprises: converting the multimedia information into a voice format and sending the control command in the voice format to the first household appliance.

5. The method according to claim 3 or 4, **characterized in that**, the multimedia information comprises at least one of weather information, time information, music, encyclopedia question answering, and dialogue information.

6. The method according to one of the preceding claims, **characterized in that**, the sending a control command according to the voice recognition result comprises: sending the voice recognition result to a fourth server if the voice recognition result is the second household appliance control information, so that the fourth server controls a second household appliance through wireless communication.

7. The method according to one of the preceding claims, **characterized in that**, the control command comprises the voice format or a text format.

8. A server (30), **characterized by** comprising:
a request module (301), configured to receive a voice recognition request from a first household appliance (20), and send the voice recognition request to a second server (40) to perform voice recognition, wherein the voice recognition request comprises a voice collected by the first household appliance;
a receiving module (302), configured to receive a voice recognition result fed back by the second server (40); and
a sending module (303), configured to send a control command according to the voice recognition result, wherein the voice recognition result comprises at least one of a first household appliance control information, a multimedia request information, and a second household appliance control information.

9. The server according to claim 8, **characterized in that**, the sending module (303) is further configured to send the control command to the first household appliance (20) according to the first household appliance control information.

10. The server according to claim 8 or 9, **characterized in that**, the sending module (303) is further configured to request multimedia information from a third server according to the voice recognition result; and receive the multimedia information, and send the multimedia information to the first household appliance.

11. The server according to claim 10, **characterized in that**, the sending module (303) is further configured to convert the multimedia information into a voice format and send the control command in the voice format to the first household appliance.

12. The server according to claim 10 or 11, **characterized in that**, the multimedia information comprises at least one of weather information, time information, music, encyclopedia question answering, and dialogue information.

13. The server according to at least one of the claims 8 to 12, **characterized in that**, the sending module (303) is further configured to send the voice recognition result to a fourth server according to the second household appliance control information, so that the fourth server controls a second household appliance through wireless communication.

14. A voice exchange system, comprising a first household appliance (20), a first server (30), and a second server (40), wherein the first household appliance is configured to collect and send a voice recognition request, wherein the voice recognition request comprises a voice collected by the first household appliance;
the first server comprises a server according to any one of claims 8 to 13; and
the second server recognizes the voice and feeds back a voice recognition result to the first server.

15. The system according to claim 14, **characterized in that**, the first household appliance (20) is a coffee maker having a voice control function.
